(19) Europäisches Patentamt
European Patent Office
Office européen des brevets

(11) EP 0 881 649 A1

(12) EUROPÄISCHE PATENTANMELDUNG

(43) Veröffentlichungstag:
02.12.1998 Patentblatt 1998/49

(51) Int. Cl.$^6$: H01G 4/12, C04B 35/468

(21) Anmeldenummer: 98201746.9

(22) Anmeldetag: 26.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 30.05.1997 DE 19722618

(71) Anmelder:
• Philips Patentverwaltung GmbH
22335 Hamburg (DE)
Benannte Vertragsstaaten:
DE

• Koninklijke Philips Electronics N.V.
5621 BA Eindhoven (NL)
Benannte Vertragsstaaten:
FR GB NL

(72) Erfinder:
Hennings, Detlev, Dr.
c/o Philips VerwaltungGmbH
Hamburg 22335 (DE)

(74) Vertreter:
Schmalz, Günther, Dipl.-Ing. et al
Philips Patentverwaltung GmbH,
Röntgenstrasse 24
22335 Hamburg (DE)

(54) Hochtemperaturkondensator

(57) Ein Kondensator, insbesondere ein Vielschichtkondensator mit inneren Elektroden aus Unedelmetall, mit einem keramischen Dielektrikum, wobei das Dielektrikum im wesentlichen aus einer dielektrischen keramischen Zubereitung mit einem Barium-Calcium-Mangan-Zirkon-Titanat als Basismaterial besteht, das die Zusammensetzung $(Ba_{1-x-s}Ca_xSr_s)_a[Ti_{1-y-z-w-n}Zr_yMn_zAl_wNb_n]O_3$ mit $0 \leq x \leq 0.04$, $0 \leq s \leq 0.003$, $0.995 \leq a \leq 1.01$, $0.09 \leq y \leq 0.15$, $0,0025 \leq z \leq 0.01$, $0 \leq w \leq 0,005$ und $0 \leq n \leq 0.005$ hat, mit einem oder mehreren der Elemente Wolfram, Yttrium und Ytterbium in einer Menge b mit $0 \leq b \leq 0.0075$ Mol /Formeleinheit dotiert ist und als weiteres Additiv $SiO_2$ in einer Menge c mit $0 \leq c \leq 0.01$ mol/Formeleinheit enthält, eignet sich besonders zur Entkopplung und Pufferung der Leistungsversorgung von Mikroprozessoren, die im Dauerbetrieb eine hohe Betriebstemperatur von 70°C bis 80°C erreichen.

FIG. 1

EP 0 881 649 A1

**Beschreibung**

Gegenstand der Erfindung ist ein Kondensator, insbesondere ein Vielschichtkondensator mit inneren Elektroden aus Unedelmetall, mit einem keramischen Dielektrikum, wobei das Dielektrikum im wesentlichen aus einer dielektrischen Zusammensetzung mit einem Barium-Calcium-Mangan-Zirkon-Titanat als Basismaterial besteht.

Vielschichtkondensatoren werden u.a. zur Entkopplung und Pufferung der Leistungsversorgung von Prozessoren, insbesondere Von Hochleistungsmikroprozessoren, verwendet. Während des Betriebes im Hochleistungsbereich erzeugen diese aktiven elektronischen Komponenten viel Wärme, selbst bei intensiver Kühlung liegt die Temperatur eines Hochleistungsprozessors im Dauerbetrieb bei 70°C bis 80°C. Konventionelle Vielschichtkondensatoren der Spezifikation Y5V haben bei einer Betriebstemperatur von 80°C nur noch 20% ihrer Nennkapazität ($\Delta C \approx$ -80%). Zur Herstellung von Mikroprozessoren werden deshalb vorzugsweise Kondensatoren der Spezifikation X7R verwendet, da diese bei einer Temperatur von 125°C noch 85% ihrer Nennkapazität aufweisen ($\Delta$ C< ±15%). Aber die spezifische Kapazität eines X7R - Kondensators ist bei Raumtemperatur etwa 5mal niedriger als die eines Kondensators der Spezifikation Y5V, deshalb müssen die Abmessungen eines X7R-Kondensators größer sein, zB. müssen die Abmessungen eines 1 µF X7R-Kondensators mindestens der Baugröße 1206 (Länge 0,12 Zoll, Breite 0,06 Zoll) entsprechen. Für Kapazitäten > 5µF können deshalb bisher nur die teureren Tantalkondensatoren verwendet werden.

Aus US 5,319,517 ist bereits ein keramischer Vielschichtchipkondensator mit inneren Elektroden und dielektrischen Schichten bekannt, dessen dielektrisches Material ein dielektrisches Oxid enthält, das die folgende Zusammensetzung hat: $[(Ba_{1-y}Ca_xSr_y)O]_m(Ti_{1-x}Zr_x)O_2$, wobei $0 \leq x \leq 0,25$, $0 \leq y \leq 0,05$, $0,1 \leq z \leq 0,3$ und $1,000 \leq m \leq 1,020$ ist und dem ein Manganoxid und/oder eine Verbindung, die beim Brennen in das Oxid umgewandelt wird, in einer Menge von 0,01 bis 0,5 Gew.-%, berechnet als Oxid (MnO), ein Yttriumoxid und/oder eine Verbindung, die beim Brennen in das Oxid umgewandelt wird, in einer Menge von 0,05 bis 0,5 Gew.-%, berechnet als Oxid ($Y_2O_3$), ein Vanadinoxid und/oder eine Verbindung, die beim Brennen in das Oxid umgewandelt wird, in einer Menge von 0,005 bis 0,3 Gew.-%, berechnet als Oxid ($V_2O_5$), ein Wolframoxid und/oder eine Verbindung, die beim Brennen in das Oxid umgewandelt wird, in einer Menge von 0,005 bis 0,3 Gew.-%, berechnet als Oxid (MnO), zugefügt ist und dessen Material für die inneren Elektroden Nickel oder eine Nickellegierung ist.

Es ist daher eine Aufgabe der vorliegenden Erfindung, einen Kondensator für hohe Betriebstemperaturen zur Verfügung zu stellen, der die genannten Nachteile der Kondensatoren des Standes der Technik nicht aufweist.

Erfindungsgemäß wird die Aufgabe gelöst durch einen Kondensator mit einem keramischen Dielektrikum und mindestens zwei Elektroden, wobei das Dielektrikum im wesentlichen aus einer dielektrischen keramischen Zubereitung mit einem Barium-Calcium-Mangan-Zirkon-Titanat als Basismaterial besteht, das die Zusammensetzung $(Ba_{1-x-s}Ca_xSr_s)_a[Ti_{1-y-z-w-n}Zr_yMn_zAl_wNb_n]O_3$ mit $0 \leq x \leq 0.04$, $0 \leq s \leq 0.003$, $0.995 \leq a \leq 1.01$, $0.09 \leq y \leq 0.15$, $0,0025 \leq z \leq 0.01$, $0 \leq w \leq 0,005$ und $0 \leq n \leq 0.005$ hat und mit einem oder mehreren der Elemente Wolfram, Yttrium und Ytterbium in einer Menge b mit $0 \leq b \leq 0.0075$ mol /Formeleinheit dotiert ist und als weiteres Additiv $SiO_2$ in einer Menge c mit $0 \leq c \leq 0,01$ mol/Formeleinheit enthält.

Ein derartiger Kondensator hat bei etwa 60°C ( Curiepunkt) seine höchste Kapazität. Bei 80°C beträgt die Kapazität noch etwa 80% des Nennwertes ($\Delta C \approx$ -80%). Die dielektrischen Verluste betragen bei 80°C tan$\delta$ < 5% . Bei Temperaturen unterhalb von 60°C zeichnet sich die dielektrische Zusammensetzung durch hohe Dissipationsverluste aus, die bis zu tan $\delta$ = 20% betragen können. Infolge seiner hohen Verluste bei Temperaturen T < 60°C heizt sich der erfindungsgemäße Kondensator von sich aus bis zu seiner Betriebstemperatur von T > 60°C auf, wenn er nicht durch die Betriebswärme des Processors auf diese Temperatur gebracht wird.

Im Rahmen der vorliegenden Erfindung ist es bevorzugt, daß das Barium-Calcium-Mangan-Zirkon-Titanat die Zusammensetzung $(Ba_{1-x-s}Ca_xSr_s)_a[Ti_{1-y-z-w-n}Zr_yMn_zAl_wNb_n]O_3$ mit $0 \leq x \leq 0.04$, $0 \leq s \leq 0.002$, $0.995 \leq a \leq 1.0$, $0.09 \leq y \leq 0.15$, $0.0025 \leq z \leq 0.01$, $0 \leq w \leq 0.005$, $0.0025 \leq n \leq 0.005$, b = 0 und c = 0 hat.

Es ist weiterhin bevorzugt, daß das Barium-Calcium-Mangan-Zirkon-Titanat die Zusammensetzung $(Ba_{1-x-s}Ca_xSr_s)_a[Ti_{1-y-z-w-n}Zr_yMn_zAl_wNb_n]O_3$ mit $0 \leq x \leq 0.04$, s = 0, $1.001 \leq a \leq 1.01$, $0.10 \leq y \leq 0.15$, $0,0025 \leq z \leq 0.01$, w = 0 und n = 0 hat, mit Wolfram und einem der Elemente Yttrium und Ytterbium in einer Menge b mit $0,0025 \leq b \leq 0.0075$ Mol /Formeleinheit dotiert ist und als weiteres Additiv $SiO_2$ in einer Menge c mit $0,005 \leq c \leq 0,0$ 1 mol/Formeleinheit enthält.

Es ist besonders bevorzugt, daß der Kondensator ein Vielschichtkondensator mit inneren Elektroden aus Nickel oder einer Nickellegierung ist.

Nachfolgend wird die Erfindung anhand einer Figur und von Beispielen weiter erläutert.

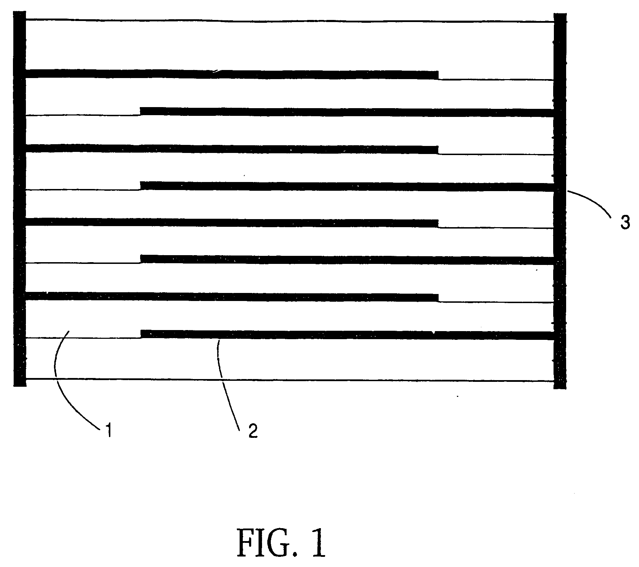

**Fig. 1** zeigt die Querschnittsansicht einer Ausführungsform des erfindungsgemäßen Kondensators. In dieser bevorzugten Ausführungsform ist der erfindungsgemäße Kondensator ein Vielschichtkondensator.

Der erfindungsgemäße keramische Vielschichtkondensator umfaßt ein keramisches Dielektrikum **1**, das aus einer Vielzahl von oxidischen dielektrischen Schichten mit einer Dicke von nicht mehr als 50µ besteht, sowie einer Vielzahl von inneren Elektroden **2**, die schichtförmig in dem Dielektrikum übereinander angeordnet sind und sich abwechselnd zu zwei gegenüberliegenden Endflächen des Dielektrikums erstrecken. Auf den Endflächen des keramischen Dielektrikums sind metallische Kontaktelektroden **3** als äußere Anschlüsse vorgesehen, die mit den entsprechenden inneren metallischen Elektroden verbunden sind.

Die Herstellung erfolgt nach den üblichen Fertigungstechniken für keramische Kondensatoren, wobei je nach der gewünschten Form und den Abmessungen, der angestrebten Genauigkeit und dem Anwendungsgebiet zahlreiche Herstellungsvarianten möglich sind.

Material für das keramische Dielektrikum ist eine dielektrische keramische Zubereitung mit einem zirkonarmen Barium-Calcium-Mangan-Zirkon-Titanat als Basismaterial, das die Zusammensetzung $(Ba_{1-x-s}Ca_xSr_s)_a[Ti_{1-y-z-w-n}Zr_yMn_zAl_wNb_n]O_3$ mit $0 \leq x \leq 0.04$, $0 \leq s \leq 0.003$, $0.995 \leq a \leq 1.01$, $0.09 \leq y \leq 0.15$, $0,0025 \leq z \leq 0.01$, $0 \leq w \leq 0,005$ und $0 \leq n \leq 0.005$ hat, mit einem oder mehreren der Elemente Wolfram, Yttrium und Ytterbium in einer Menge b mit $0 \leq b \leq 0.0075$ Mol /Formeleinheit dotiert ist und als weiteres Additiv $SiO_2$ in einer Menge c mit $0 \leq c \leq 0.01$ mol/Formeleinheit enthält.

Die Materialauswahl für die Elektroden unterliegt keinen besonderen Beschränkungen, so daß man hierfür ein Metall oder eine Kombination von zwei oder mehreren üblicherweise angewandten Metallen verwenden kann. Die Elektroden können aus Edelmetallen, wie Platin, Palladium, Gold oder Silber bestehen. Sie können auch Chrom, Zirkonium, Vanadium, Zink, Kupfer, Zinn, Blei, Mangan, Molybdän, Wolfram, Titan oder Aluminium enthalten. Bevorzugt bestehen sie aus einem Nichtedelmetall ausgewählt aus der Gruppe Nickel, Eisen, Cobalt und deren Legierungen.

Die Herstellung der dielektrischen keramischen Zubereitung kann nach den üblichen Methoden zur Pulverherstellung, z.B. durch das Mischoxid-Verfahren, Copräzipitation, Sprühtrocknung, Sol/Gel-Verfahren, Hdrothermalverfahren oder Alkoxid-Verfahren erfolgen. Bevorzugt ist das Mischoxid-Verfahren, bei dem die Ausgangsoxide oder thermisch zersetzbare Verbindungen, wie z.B. Carbonate, Hydroxide, Oxalate oder Acetate, gemischt und gemahlen werden. Anschließend wird das Ausgangspulver bei 1000°C bis 1400°C kalziniert.

Für die Formgebung zum Grünkörper können ebenfalls alle üblichen Methoden verwendet werden. 'Für keramische Kondensatoren in Vielschichttechnologie wird zur Formgebung aus dem kalzinierten Pulver zunächst eine Suspension hergestellt, die neben dem Pulver als weitere Komponente Lösungsmittel, Bindemittel und gegebenenfalls Weichmacher und Dispergierhilfsmittel enthält. Das Lösungsmittel kann beispielsweise Wasser, ein Alkohol, Toluol, Xylol oder Trichloräthylen sein. Als Bindemittel werden üblicherweise organische Polymere wie Polyvinylalkohol, Polyvinylbutyral oder Polymethymetacrylat verwendet. Als Weichmacher kann man Glyzerin, Polyglykole oder Phtalate verwenden. Weiterhin kann man der Suspension Dispergiermittel wie Alkylarylpolyätheralkohole, Polyäthylenglykoläthyläther oder Octylphenoxyäthanol zusetzen.

Aus der Suspension werden nach dem bevorzugten Verfahren durch ein Foliengießverfahren grüne keramische Folien hergestellt. Bei dem Foliengießverfahren wird die Suspension auf eine sich bewegende Trägeroberfläche gegossen. Nach dem Verdampfen des Lösungsmittels bleibt je nach Bindersystem eine mehr oder weniger flexible Folie zurück, die geschnitten, mit einer Metallpaste im Muster der inneren Elektroden im Siebdruckverfahren bedruckt und laminiert wird. Aus dem Laminat werden die einzelnen Vielschichtkondensatoren ausgeschnitten. Diese werden zunächst in schwach reduzierender Atmosphäre bei Temperaturen zwischen 1100 und 1400 °C gesintert und anschließend in schwach oxidierender Atmosphäre bei Temperaturen zwischen 600 und 1100°C getempert. Als schwach reduzierende Atmosphäre kann man mit Wasserdampf gesättigten Stickstoff mit einer Beimengung von 0,5 bis 2 Vol.-% Wasserstoff, als schwach oxidierende Atmosphäre Stickstoff mit 5 ppm bis 100 ppm Sauerstoff verwenden.

Zur Bildung der äußeren Elektroden werden an den Endflächen der Kondensatoren eine Metallpaste, die beispielsweise Nickel enthält, aufgetragen und eingebrannt. Die äußeren Elektroden können aber auch durch Aufdampfen einer Metallschicht, beispielsweise aus Gold, aufgebracht werden.

Zur Charakterisierung der erfindungsgemäßen Kondensatoren werden in bekannter Weise die Dielektrizitätskonstante $\varepsilon$ bei 25°C und der Verlustfaktor tg $\delta$ gemessen. Die Lebensdauer $\tau$ wird in einem beschleunigten Lebensdauertest (ALT) bei 350°C und 900 V gemessen. Dazu werden mit Elektroden aus CrNi und Au (50 nm) kontaktierte Test-Pillen mit 5 mm Durchmesser und einer Schichtdicke von 0,05 mm hergestellt, auf 350°C aufgeheizt und es wird Spannung von 900 V/mm angelegt. Man mißt den Strom, aus dem der Isolationswiderstand berechnet wird. Nach Start des Tests ist der Isolationswiderstand zunächst hoch. Im weiteren bleibt der Isolationswiderstand im wesentlichen konstant auf hohem Niveau. Erst nach einer gewissen charakteristischen Degradationszeit beginnt der Isolationswiderstand abzufallen. Der Leckstrom wächst in einer zur bisherigen Meßzeit kurzen Zeit um mehrere Größenordnungen an. Die Lebensdauer $\tau$ ist definiert als die Zeit, in dem der Leckstrom um eine Zehnerpotenz angewachsen ist.

**Ausführungsbeispiel 1**

Für die Herstellung eines Vielschichtkondensators mit einem keramischen Dielektrikum mit der Zusammensetzung $Ba_{1.01}[Ti_{0.875}Zr_{0.12}Mn_{0.005}]O_3$ mit Wolfram und Yttrium in einer Menge von jeweils 0,0025 Mol/Formeleinheit und $SiO_2$ in einer Menge von 0.01 Mol/ Formeleinheit werden 199.33 g $BaCO_3$ ($d_{50}$ = 1,1μm, BET: 2,1 m²/g), 69.91 g $TiO_2$ ($d_{50}$= 0,48μm, BET: 7 m²/g), 14.79 g $ZrO_2$ ($d_{50}$ =0,12μm, BET: 21,9m²/g), 0,57 g $MnCO_3$, 0,58 g $WO_3$ ($d_{50}$ = 0,15μm), 0,56 g $Y_2O_3$($d_{50}$ = 0,34 μm) und 0.61g $SiO_2$ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ - Kugeln in Isopropanol gemahlen. Nach dem Mahlen in der Planetkugelmühle wird das Gemisch unter einem Oberflächenverdampfer an Luft getrocknet und danach 6 h bei 1250°C kalziniert. Man mischt das pulverförmige Material mit Polyvinylalkohol als Bindemittel, einem oberflächenaktiven Mittel, einem Dispergiermittel und Wasser zu einem Schlicker. Den Schlicker verarbeitet man in einer Rakelbeschichtungseinrichtung zu grünen keramischen Folien mit einer Dicke von 20 $\mu$m.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300°C gesintert. Die Aufheizrate beträgt 300°C/h bis 1000°C und 50°C/h bis 1300°C. Während des Sinterprozesses wird durch den Ofen ein Gasgemisch bestehend aus 99 % $N_2$ und 1 % $H_2$ geleitet, das mit Wasserdampf gesättigt ist. Es wird mit 300°C/h abgekühlt. Nach dem Sintern werden die Kondensatoren in einem Temperofen bei einer Temperatur von 1000°C getempert. Während des Temperprozesses wird durch den Ofen ein Gasgemisch bestehend aus Stickstoff mit 50 - 100 ppm Sauerstoff geleitet. Als äußere Elektroden wird eine 6 nm dicke CrNi-Schicht aufgedampft, die mit 0,15 $\mu$m Au beschichtet wird.

Testergebnisse: $T_{curie}$ 60°C, $\varepsilon$ = 19000, tan $\delta$ < 0.5% bei 80°C, $\tau$ > 100 h.

**Ausführungsbeispiel 2**

Für die Herstellung eines Vielschichtkondensators mit einem keramischen Dielektrikum mit der Zusammensetzung $Ba_{1.005}[Ti_{0.875}Zr_{0.12}Mn_{0.005}]O_3$ mit Wolfram in einer Menge von 0,0025 Mol/Formeleinheit, Yttrium in einer Menge von 0,0025 Mol/Formeleinheit und $SiO_2$ in einer Menge von 0.01 Mol/Formeleinheit werden 198.34 g $BaCO_3$ ($d_{50}$ = 1,1$\mu$m, BET: 2,1 $m^2$/g), 69.91 g $TiO_2$ ($d_{50}$= 0,48$\mu$m, BET: 7 $m^2$/g), 14.79 g $ZrO_2$ ($d_{50}$ =0,12$\mu$m, BET: 21,9$m^2$/g), 0.57 g $MnCO_3$, 0,58 g $WO_3$ ($d_{50}$ = 0,15$\mu$m), 0.58 g $Y_2O_3$ ($d_{50}$= 0,34 $\mu$m) und 0,61 g $SiO_2$ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen.

Nach dem Mahlen in der Planetkugelmühle wird das Gemisch unter einem Oberflächenverdampfer an Luft getrocknet und danach 6 h bei 1250°C kalziniert. Man mischt das pulverförmige Material mit Polyvinylalkohol als Bindemittel, einem oberflächenaktiven Mittel, einem Dispergiermittel und Wasser zu einer Suspension. Die Suspension verarbeitet man in einer Rakelbeschichtungseinrichtung zu grünen keramischen Folien mit einer Dicke von 20 $\mu$m.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300°C gesintert. Die Aufheizrate beträgt 300°C/h bis 1000°C und 50°C/hbis 1300°C. Während des Sinterprozesses wird durch den Ofen ein Gasgemisch bestehend aus 99 % $N_2$ und 1 % $H_2$ geleitet, das mit Wasserdampf gesättigt ist. Es wird mit 300°C/h abgekühlt. Nach dem Sintern werden die Kondensatoren in einem Temperofen bei einer Temperatur von 1000°C getempert. Während des Temperprozesses wird durch den Ofen ein Gasgemisch bestehend aus Stickstoff mit 10 - 50 ppm Sauerstoff geleitet.

Als äußere Elektroden wird eine 6 nm dicke CrNi-Schicht aufgedampft, die mit 0,15 $\mu$m Au beschichtet wird.

Testergebnisse: $T_{curie}$ = 62°C, $\varepsilon$= 14 000, tan $\delta$ bei 80°C <0.5 %, $\tau$ > 250 h.

**Ausführungsbeispiel 3**

Für die Herstellung eines Vielschichtkondensators mit einem keramischen Dielektrikum mit der Zusammensetzung $(Ba_{1.005}[Ti_{0.87}Zr_{0.12}Mn_{0.01}]O_3$ mit Ytterbium in einer Menge von 0,005 Mol/Formeleinheit, Wolfram in einer Menge von 0,005 Mol/Formeleinheit und $SiO_2$ in einer Menge von 0.01 Mol/Formeleinheit werden 198.34 g $BaCO_3$ ($d_{50}$ = 1,1$\mu$m, BET: 2,1 $m^2$/g), 69.51 g $TiO_2$ ($d_{50}$= 0,48$\mu$m, BET: 7 $m^2$/g), 14.79 g $ZrO_2$ ($d_{50}$ =0,12$\mu$m, BET: 21,9$m^2$/g), 1.15 g $MnCO_3$, 1.16 g $WO_3$ ($d_{50}$ = 0,15$\mu$m), 1.97 g $Yb_2O_3$ ($d_{50}$ = 0,34 $\mu$m) und 0.61g $SiO_2$ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen.

Nach dem Mahlen in der Planetkugelmühle wird das Gemisch unter einem Oberflächenverdampfer an Luft getrocknet und danach 6h bei 1250°C kalziniert. Man mischt das pulverförmige Material mit Polyvinylalkohol als Bindemittel, einem oberflächenaktiven Mittel, einem Dispergiermittel und Wasser zu einem Schlicker. Den Schlicker verarbeitet man in einer Rakelbeschichtungseinrichtung zu grünen keramischen Folien mit einer Dicke von 20 $\mu$m.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300°C gesinter. Die Aufheizrate beträgt 300°C/h bis 1000°C und 50°C/hbis 1300°C. Während des Sinterprozesses wird durch den Ofen ein Gasgemisch bestehend aus 99 % $N_2$ und 1 % $H_2$ geleitet, das mit

Wasserdampf gesättigt ist. Es wird mit 300°C/h abgekühlt. Nach dem Sintern werden die Kondensatoren in einem Temperofen bei einer Temperatur von 1000°C getempert. Während des Temperprozesses wird durch den Ofen ein Gasgemisch bestehend aus Stickstoff mit 50 - 100 ppm Sauerstoff geleitet.

Als äußere Elektroden wird eine 6 nm dicke CrNi-Schicht aufgedampft, die mit 0,15 $\mu$m Au beschichtet wird.

Testergebnisse: $T_{Curie}$ = 57°C, $\varepsilon$ = 10500, tan $\delta$ bei 80°C < 0.5%, $\tau$ > 250 h.

**Ausführungsbeispiel 4**

Für die Herstellung eines Vielschichtkondensators mit einem keramischen Dielektrikum mit der Zusammensetzung $(Ba_{0.958}Ca_{0.04}Sr_{0.002})_{1.003}[Ti_{0.868}Zr_{0.12}Mn_{0.005}Al_{0.002}Nb_{0.005}]O_3$ werden 189.63 g $BaCO_3$ ($d_{50}$ = 1,1$\mu$m, BET: 2,1 $m^2$/g), 4.00 g $CaCO_3$ ($d_{50}$ = 0,8$\mu$m), 0.29 g $SrCO_3$, 69.35 g $TiO_2$ ($d_{50}$= 0,48$\mu$m, BET: 7 $m^2$/g), 14.79g $ZrO_2$ ($d_{50}$ =0,12$\mu$m, BET: 21,9$m^2$/g), 0,57 g $MnCO_3$, 0.20 g $Al_2O_3$ und 1.33 g $Nb_2O_5$ in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen.

Nach dem Mahlen in der Planetkugelmühle wird das Gemisch unter einem Oberflächenverdampfer an Luft getrocknet und danach 6h bei 1250°C kalziniert. Man mischt das pulverförmige Material mit Polyvinylalkohol als Bindemittel, einem oberflächenaktiven Mittel, einem Dispergiermittel und Wasser zu einem Schlicker. Den Schlicker verarbeitet man in einer Rakelbeschichtungseinrichtung zu grünen keramischen Folien mit einer Dicke von 20 $\mu$m.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300°C gesintert. Die Aufheizrate beträgt 300°C/h bis 1000°C und 50°C/hbis 1300°C. Während des Sinterprozesses wird durch den Ofen ein Gasgemisch bestehend aus 99 % $N_2$ und 1 % $H_2$ geleitet, das mit Wasserdampf gesättigt ist. Es wird mit 300°C/h abgekühlt. Nach dem Sintern werden die Kondensatoren in einem Temperofen bei einer Temperatur von 1000°C getempert. Während des Temperprozesses wird durch den Ofen ein Gasgemisch bestehend aus Stickstoff mit 50 - 100 ppm Sauerstoff geleitet.

Als äußere Elektroden wird eine 6 nm dicke CrNi-Schicht aufgedampft, die mit 0,15 $\mu$m Au beschichtet wird.

Testergebnisse: $T_{Curie}$ = 65°C, $\varepsilon$ = 14000, tan $\delta$ bei 80°C < 0.5%, $\tau$ > 50 h.

**Patentansprüche**

1. Kondensator mit einem keramischen Dielektrikum und mindestens zwei Elektroden, wobei das Dielektrikum im wesentlichen aus einer dielektrischen keramischen Zubereitung mit einem Barium-Calcium-Mangan-Zirkon-Titanat als Basismaterial besteht, das die Zusammensetzung $(Ba_{1-x-s}Ca_xSr_s)_a[Ti_{1-y-z-w-n}Zr_yMn_zAl_wNb_n]O_3$ mit $0 \leq x \leq 0.04$, $0 \leq s \leq 0.003$, $0.995 \leq a \leq 1.01$, $0.09 \leq y \leq 0.15$, $0,0025 \leq z \leq 0.01$, $0 \leq w \leq 0,005$ und $0 \leq n \leq 0.005$ hat, mit einem oder mehreren der Elemente Wolfram, Yttrium und Ytterbium in einer Menge b mit $0 \leq b \leq 0.0075$ Mol /Formeleinheit dotiert ist und als weiteres Additiv $SiO_2$ in einer Menge c mit $0 \leq c \leq 0.01$ mol/Formeleinheit enthält.

2. Kondensator gemäß Anspruch 1,
   <u>dadurch gekennzeichnet,</u>
   daß das Barium-Calcium-Mangan-Zirkon-Titanat die Zusammensetzung $(Ba_{1-x-s}Ca_xSr_s)_a[Ti_{1-y-z-w-n}Zr_yMn_zAl_wNb_n]O_3$ mit $0 \leq x \leq 0.04$, $0 \leq s \leq 0.002$, $0.995 \leq a \leq 1.0$, $0.09 \leq y \leq 0.15$, $0,0025 \leq z \leq 0.01$, $0 \leq w \leq 0.005$, $0.0025 \leq n \leq 0.005$, b = 0 und c = 0 hat.

3. Kondensator gemäß Anspruch 1, dadurch
   <u>dadurch gekennzeichnet,</u>
   daß das Barium-Calcium-Mangan-Zirkon-Titanat die Zusammensetzung $(Ba_{1-x-s}Ca_xSr_s)_a[Ti_{1-y-z-w-n}Zr_yMn_zAl_wNb_n]O_3$ mit $0 \leq x \leq 0.04$, $s = 0$, $1.001 \leq a \leq 1.01$, $0.10 \leq y \leq 0.15$, $0,0025 \leq z \leq 0.01$, w = 0 und n = 0 hat, mit Wolfram und einem der Elemente Yttrium und Ytterbium in einer Menge b mit $0,0025 \leq b \leq 0.0075$ Mol /Formeleinheit dotiert ist und als weiteres Additiv $SiO_2$ in einer Menge c mit $0,005 \leq c \leq 0.01$ mol/Formeleinheit enthält.

4. Kondensator gemäß Anspruch 1,
   <u>dadurch gekennzeichnet,</u>
   daß er ein Vielschichtkondensator mit inneren Elektroden aus Nickel oder einer Nickellegierung ist.

FIG. 1

Europäisches
Patentamt

# EUROPÄISCHER RECHERCHENBERICHT

Nummer der Anmeldung

EP 98 20 1746

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DATABASE WPI<br>Section Ch, Week 8339<br>Derwent Publications Ltd., London, GB;<br>Class A81, AN 83-775749<br>XP002075018<br>& SU 977 437 A (ZAREMBA N E)<br>* Zusammenfassung * | 1 | H01G4/12<br>C04B35/468 |
| A | | 2-4 | |
| | --- | | |
| X | US 4 642 732 A (IKEDA MASAAKI ET AL) 10. Februar 1987 | 1,2,4 | |
| A | | 3 | |
| | * Ansprüche 1-4 *<br>* Beispiel 10; Tabelle 1 * | | |
| | --- | | |
| X | DATABASE WPI<br>Section Ch, Week 9125<br>Derwent Publications Ltd., London, GB;<br>Class L02, AN 91-183149<br>XP002075017<br>-& JP 03 112 860 A (MATSUSHITA ELEC IND CO LTD)<br>* Zusammenfassung *<br>* Beispiele 1-3; Tabelle 1 * | 1,4 | RECHERCHIERTE SACHGEBIETE (Int.Cl.6)<br><br>H01G<br>C04B |
| A | | 2,3 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 20. August 1998 | Rosenberger, J |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

\& : Mitglied der gleichen Patentfamilie, übereinstimmendes
Dokument

EPO FORM 1503 03.82 (P04C03)

Europäisches
Patentamt

**EUROPÄISCHER RECHERCHENBERICHT**

Nummer der Anmeldung

EP 98 20 1746

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN<br>vol. 017, no. 046 (C-1021), 28. Januar 1993<br>-& JP 04 260665 A (TDK CORP), 16. September 1992<br>* Beispiele; Tabelle 1 *<br>-& DATABASE WPI<br>Section Ch, Week 9244<br>Derwent Publications Ltd., London, GB;<br>Class L02, AN 92-360546<br>XP002075019<br>* Zusammenfassung *<br>* Beispiele; Tabelle 1 *<br>----- | 1-4 | |

RECHERCHIERTE
SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 20. August 1998 | Rosenberger, J |

EPO FORM 1503 03.82 (P04C03)